# EUROPEAN PATENT SPECIFICATION

(11) **EP 4 553 472 B1**
(45) Date of publication and mention of the grant of the patent: **22.04.2026**
(21) Application number: 23208152.1
(22) Date of filing: 07.11.2023
(51) Int. Cl.: G01M 5/00

(54) **TEST RIG AND TESTING METHOD FOR A WIND TURBINE BLADE BEARING**
PRÜFSTAND UND TESVERFAHREN FÜR EIN WINDTURBINENSCHAUFELLAGER
BANC D'ESSAI ET MÉTHODE D'ESSAI POUR PALIER DE PALE D'ÉOLIENNE

(43) Date of publication of application: 14.05.2025
(73) Proprietor: Siemens Gamesa Renewable Energy A/S, 7330 Brande (DK)
(72) Inventor: Fritze, Martin, 8600 Silkeborg (DK); Olsen, Mike Juul, 7200 Grindsted (DK); Simonsen, Morten Ankjaer, 6823 Ansager (DK)
(74) Representative: SGRE-Association

(56) References cited:
- DE-B4- 102013 004 938
- ANONYMOUS: "Blade bearing test for large scale wind turbines - IDOM", 5 August 2021 (2021-08-05), XP093139939, Retrieved from the Internet <URL:https://www.idom.com/en/project/blade-bearing-test-for-large-scale-wind-turbines/> [retrieved on 20240311]

## Description

### FIELD OF THE INVENTION

The present invention relates to a test rig to test a blade bearing of a wind turbine rotor blade. It further relates to a method of testing a blade bearing of a wind turbine blade using a test rig.

### BACKGROUND

Wind turbine blades are mounted by blade bearings to the hub of the wind turbine rotor. Kinetic energy taken up from the wind is transferred from the blade to the hub through the respective bearings. The bearings used for connecting the blades to the hub thus experience a significant load while the wind generator is in operation, in particular in high wind situations. The blade may need to be pitched in such situations. This may result in that the bearings are prone to significant wear. For these reasons, the operation of the blade bearings under loads needs to be tested in a test setup before installing them on a wind turbine.

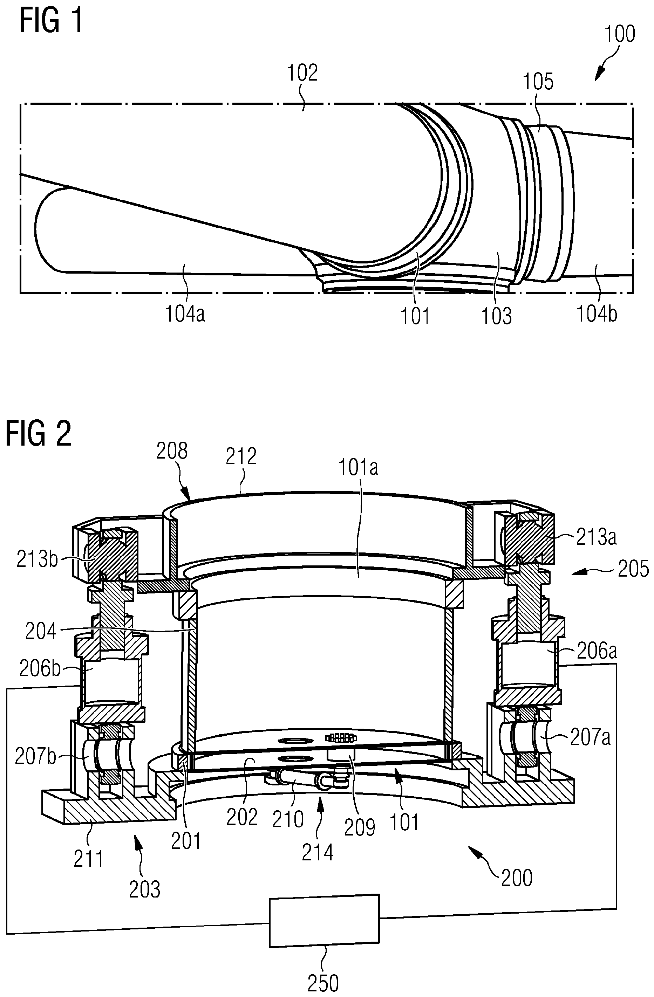

Such a test setup needs to able to emulate the forces exerted on the blade bearing whilst in operation on a wind turbine. As shown in Fig.1, a conventional test rig 100 comprises a static mount 103. The mount 103 is connected on two sides to permanently installed steel structures 104a, 104b and on one side to a long load tube 102, e.g. by a respective adapter 105. Between the load tube 102 and the mount 103, the blade bearing 101 to be tested is placed. The tube 102 is used in order to reproduce certain bending moments acting on the blade bearing 101 to be tested. The tube 102 can be either made of steel or, in order to achieve a more realistic environment, a wind turbine blade that is also used in operation. Such a test rig 100 may however apply a mechanically unfavourable load on the tested blade bearing 101, i.e., in the radial direction, thus resulting in shear forces acting on the blade bearing 101 to be tested, which cannot be found when it is installed on an operating wind turbine. Furthermore, bigger blades are needed in future wind turbine generations in order to efficiently generate more power. As a result, the size of the load tube 106 being used in the test rig setup is becoming progressively larger, hence increasing the dimension of the test rig 100 itself.

It is thus desirable to avoid such shear forces acting on the blade bearing to be tested and to provide a way to exert the forces in the axial direction without causing forces in the radial direction of the blade bearing to be tested. It is particularly desirable to reduce the size of the test rig setup, so that blade bearings of bigger blades can be tested more efficiently.

The document "Blade bearing test for large scale wind turbines - IDOM", retrievable under https://www.idom.com/en/project/ blade-bearing-test-for-large-scale-wind-turbines/, describes a test bench that is based on a Stewart platform. The test bench is powered by 6 hydraulic servo-actuators mounted to the floor of the test facility. The hydraulic actuators are separate from the structure on which the blade bearing is placed to be tested and are also mounted to the floor of the test facility. The blade bearing to be tested is placed onto a rail.

The disclosure DE 102013004938 B4 describes a device for connecting a nacelle of a wind turbine to be tested to a test stand. The nacelle is connected to a drive shaft by means of bearing adapters and hub adapters. The hub adapter is connected to the drive shaft. The bearing adapters are connected to the blade bearings of the nacelle. The hub adapter has claws which can be attached to the bearing adapter to transmit the torque of the drive shaft to the nacelle.

### SUMMARY

Accordingly, there is a need to mitigate at least some of the drawbacks mentioned above, in particular to reduce the shear forces acting on the bearing to be tested and to provide a more compact testing device.

This need is met by the the invention, which provides a test rig for testing a blade bearing of a wind turbine blade as defined in claim 1 and a method for testing a blade bearing of a wind turbine blade with a test rig as defined in claim 14.

The dependent claims describe embodiments of the invention.

A test rig for testing a blade bearing of a wind turbine blade is provided. The blade bearing comprises a first part and a second part that is rotatable about an axial direction with respect to the first part. The test rig comprises a bearing support, which is configured to be mounted to the first part of the blade bearing, a shaft element, which is configured to be mounted to the second part of the blade bearing and able to rotate with respect to the bearing support and a test load unit that is configured to apply a load in the axial direction to the shaft element. The test load unit comprises at least one actuator that is controllable to apply the load. Preferably, it may comprise at least two or exactly two actuators.

Using such a test rig for testing the blade bearing is beneficial. By using a test load unit, the size of the test rig may be reduced whilst the bending moments that can be applied on the blade bearing to be tested are comparable to forces acting on the blade bearings of a wind turbine in operation. Furthermore, such test rig may reduce the load in axial direction acting on the bearing to be tested. For example, the axial load component applied by the shaft element to the blade bearing may be, e.g., at least 2, 3, 5 or 10 times larger than the radial load component. Accordingly, shear forces acting on the bearing to be tested may be mitigated.

The load may be applied between the bearing support and the shaft element so that it may act on the bearing when it is mounted to the bearing support and the shaft element. The load may be applied in positive and/or negative direction, i.e., the at least one actuator can push or pull.

According to the invention, the test rig is configured to confine the load applied to the blade bearing by the test load unit to the test rig. Accordingly, the load applied to the blade bearing to be tested by the test load unit is not transferred to the ground on which the test rig is arranged. This may improve the transportability of the test rig and its installation.

In an embodiment, the bearing support may comprise at least one mount to which the at least one actuator is mounted. The bearing support may also be mounted to a frame, wherein the frame may comprise at least one mount to which the at least one actuator may be mounted. The actuator may thus directly act on the bearing support or indirectly on the bearing support through the frame. The load applied by the actuator may thereby be taken up internally and may be confined to the test rig.

In an embodiment, the bearing support may comprise a wind turbine component or a rotor hub of a wind turbine component. By mounting the blade bearing to such component, in particular to a hub, a more realistic testing environment may be created for testing the blade bearing. In particular, it may allow to include the influence of the bending moments from the hub acting on the blade bearing into the test regime.

The test rig may comprise a frame, the hub being mounted to the frame, wherein the at least one actuator may be mounted to the frame and may act between the test load unit and the frame. Such a test rig may allow testing two or more blade bearings at the same location individually. Furthermore, it may facilitate mounting of the hub.

In an embodiment, the test load unit comprises a load transfer component. The at least one actuator is mounted to the load transfer component to apply a load to the load transfer component. The load transfer component is furthermore configured to transfer the applied load to the shaft element. The load transfer component may for example comprise or be a load yoke.

In an embodiment, the shaft element is rotatable with respect to the load transfer component. It may comprise any type of rotational joint or a bearing placed between the shaft element and the load transfer component. The load transfer component may comprise at least one or at least two mounts, each being configured to be mounted to one of the at least one actuator, and a load application section configured to apply the load to the shaft section. The joint or bearing may be mounted to a load application section, which may be framed by an annular section or a plate.

In an embodiment, the load transfer component is configured to be mounted to a first part of a second blade bearing to be tested. The second blade bearing may have a second part rotatable with respect to the first part, wherein a second end of the shaft element is configured to be mounted to the second part of the second blade bearing, the second end of the shaft element being opposite to a first end of the shaft element to which the second part of the first blade bearing is to be mounted. Such an arrangement allows testing of two bearings at the same time, as one test rig setup comprises two possibilities to install the bearings to be tested by one respective test load unit.

In an embodiment, the test rig comprises at least two test load units and at least two respective shaft elements. Each test load unit is configured to apply a load via the respective shaft element to a blade bearing to be tested. The respective bearing support is configured to be mounted to the first part of each of the at least two blade bearings to be tested. For example, the at least two blade bearings may be mounted to the same rotor hub. Accordingly, at least two blade bearings can be tested individually and simultaneously.

In an embodiment, the support is a rotor hub of a wind turbine, wherein the hub comprises three blade mounts, wherein one, two, or each of the blade mounts is configured to be mounted to the first part of a respective blade bearing to be tested, wherein the test rig comprises one, two, or three respective test load units and corresponding shaft elements, each test load unit being configured to apply a load via the respective shaft element to the respective blade bearing to be tested.

Plural bearings may thus be tested in a realistic environment.

Furthermore, the test rig may comprise a frame to which the hub is mounted. The at least one actuator of each test load unit may be mounted to the frame and may act between the frame and the respective test load unit, in particular between the frame and a respective load transfer component. Such a setup may allow to test four or more blade bearings. Blade bearings mounted to different blade mounts may be tested independent from one another with different test parameters.

In an embodiment, the test load unit may comprise at least two actuators mounted on opposite sides of a load transfer component that is configured to transfer the load applied by the at least two actuators to the shaft element. This may allow distributing different loads acting to either push or pull on the bearing to be tested. Furthermore, this may allow distributing the forces acting on the blade bearing to be tested more uniformly.

The test load rig may comprise a controller configured to control the at least one actuator to apply a predetermined load to the shaft element to test a blade bearing. The controller may also control the at least one actuator to apply a bending moment to the blade bearing being tested. For example, the controller may be configured to cause an actuator on one side of the blade bearing to push and to cause an actuator on the other side of the bearing to pull to apply the bending moment. Such controller may further ensure that the forces either pulling or pushing on the blade bearing to be tested are acting in accordance with a predetermined testing protocol. Further, the controller may be configured to control the one, two or more actuators such that the forces acting on the blade bearing to be tested are distributed uniformly, whereby an imbalance of the forces acting on different sides of the blade bearing to be tested can be avoided.

The actuator may be or comprise a hydraulic piston, an electric motor, or a pneumatic piston.

In an embodiment, the test rig further comprises a pitch actuation system, the pitch actuation system being controllable to rotate the shaft element with respect to the bearing support. The pitch actuation system may comprise a hydraulic cylinder actuator, or a hydraulic piston actuator, or a hydraulic motor, or an electric motor, or a combination thereof. Preferably, the pitch actuation system may be configured to rotate the blade bearing continuously, e.g. via an electric or a hydraulic motor, and/or to rotate the shaft element in a reciprocating movement with respect to the bearing support. The latter may result in a movement resembling the pitching of the blade, e.g. using a hydraulic cylinder or the above mentioned electric or hydraulic motor. By rotating the blade bearing continuously, the fatigue testing may be performed more time efficiently. Further, enabling the blade bearing to be moved reciprocally allows the testing of the effects of pitch oscillations on the blade bearing. The combination of both test modes may allow a more realistic test setup that is comparable with the actual setup of a wind turbine and that may perform time efficient testing.

The pitch actuation system may for example be an actual pitch drive of the respective wind turbine rotor, e.g., as present in the hub, if the hub is used as bearing support. The controller may be configured to operate the pitch actuation system while controlling the at least one actuator of the test load unit to apply a load in axial direction. Such setup may allow to pitch the blade bearing to be tested, so that the blade bearing can be tested under realistic operating conditions. It may also be possible to test the effects of different pressures applied by the controller to the blade bearing to be tested at different adjusted angles by the pitch actuation system. The test rig may allow a fatigue testing of the bearing using loads experienced during the bearing lifetime to be performed within a relative short time.

The test rig may be configured to support the blade bearing to be tested such that the first part of the blade bearing lies in a substantially vertical plane.

In a further embodiment, the test rig comprises a pivoting mechanism for inserting a blade bearing to be tested into the test rig. The pivoting mechanism is configured to allow a pivoting of at least a part of the test load unit, in particular of a load transfer component thereof, into a horizontal position to allow the shaft element and at least one blade bearing to be tested to be mounted to the test load unit. Such a mechanism may be advantageous when changing the at least one bearing to be tested, as the mounting of the bearing may be facilitated in a horizontal position of the load transfer component. Furthermore, such a mechanism may allow servicing the rig itself more efficiently, as the different components are easier to reach when they are situated in a horizontal position.

Furthermore, a method of testing a blade bearing of a wind turbine blade using a test rig is provided as defined in claim 14.
By such a testing method, any of the advantages outlined above may be achieved.

In an embodiment, the method further comprises pivoting at least a part of the test load unit into a horizontal position and mounting the blade bearing to be tested to the pivoted part of the test load unit, e.g., to a load transfer component or a load yoke. It may further comprise pivoting the test load unit into the test position. These steps are performed prior to testing the at least one blade bearing. Due to the pivoting, the changing of the blade bearing to be tested and the maintaining of the test rig may be facilitated.

The method may be performed by a test rig having any of the configurations disclosed herein. The method may comprise any of the testing steps disclosed herein. Likewise, the test rig may be configured to perform any of the methods disclosed herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating a conventional wind turbine blade bearing test rig.
Fig. 2 is a schematic drawing illustrating a test rig for a blade bearing of a wind turbine according to an embodiment.
Fig. 3 is a schematic drawing illustrating a test rig for a blade bearing of a wind turbine according to a further embodiment.
Fig. 4 is a schematic drawing illustrating a pivoting mechanism of a test rig for a blade bearing of a wind turbine according to a further embodiment.
Fig. 5 is a flow drawing illustrating a method of testing a wind turbine blade bearing according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

A blade bearing to be tested may herein also be referred to as 'bearing'.

Fig. 2 illustrates an embodiment of the test rig 200. The test rig may comprise a bearing support 203, in this example a plate or yoke 211, which is configured to be mounted on the first part 201 of the blade bearing 101, a shaft element 204, which is configured to be mounted on the second part 202 of the blade bearing 101, which can be rotated with respect to the first part 201 of the bearing 101. The shaft element 204 may for example be configured to have a stiffness corresponding to a stiffness of a root section of a wind turbine rotor blade. The test rig 200 further comprises a test load unit 205 applying a load in the axial direction to the shaft element 204. The test load unit 205 comprises two actuators 206a and 206b, which may for example be hydraulic actuators, and further comprises a load transfer component 208. The actuators are installed on the opposite side of one another and are connected to the bearing support 203 via mounts 207a and 207b. They are further connected to the load transfer component 208 via the mounts 213a and 213b. The load transfer component 208 may be a load yoke 212.

A pitch actuation system 214 may be attached by an actuator mount 209 to the second part 202 of the bearing 101 allowing blade bearing 101 to be rotated in a reciprocating movement with respect to the bearing support 203 and/or rotated continuously. Preferably, the reciprocating movement is performed by a reciprocating movement actuator 210 (e.g., hydraulic actuator or motor) of pitch actuation system 214. A continuous rotation of the second part 202 of the bearing 101 may be performed by, e.g., a hydraulic cylinder or the above mentioned electric or hydraulic motor of pitch actuation system 214. The possibility to continuously rotate blade bearing 101 may result in a time efficient test environment. Using both test modes of pitch actuation system 214, pitch oscillation scenarios can also be included in the test regime of blade bearing 101, resulting in a test setup that corresponds closely to the operation on a wind turbine.

A second blade bearing 101a to be tested may be installed on the other end of the shaft element 204, using the test load unit 205 as a bearing support. By using the test load unit 205 as another bearing support, two blade bearings may be tested simultaneously. When the pitch actuation system 214 rotates the second part 202 of the blade bearing 101, the shaft element 204 and the corresponding second bearing part of the second blade bearing 101a are likewise rotated. Two bearings may thus be tested with a single pitch actuation system 214.

The forces applied by the two actuators 206a, 206b may be used to emulate the forces acting on the bearings installed on a wind turbine. They may be applied simultaneously to the two bearings 101 and 101a, thus providing a more efficient way to test the blade bearings.

Test rig 200 comprises a controller 250 configured to control the loads applied on the blade bearings 101 and optionally 101a via the test load unit 205. The controller 250 allows the load applied on the blade bearings by each actuator 206a, 206b to be controlled individually. This may make it possible to push on the blade bearing on one side and pull on the other side, so that different test regimes, such as bending loads, can be applied to the blade bearings 101 and optionally 101a.

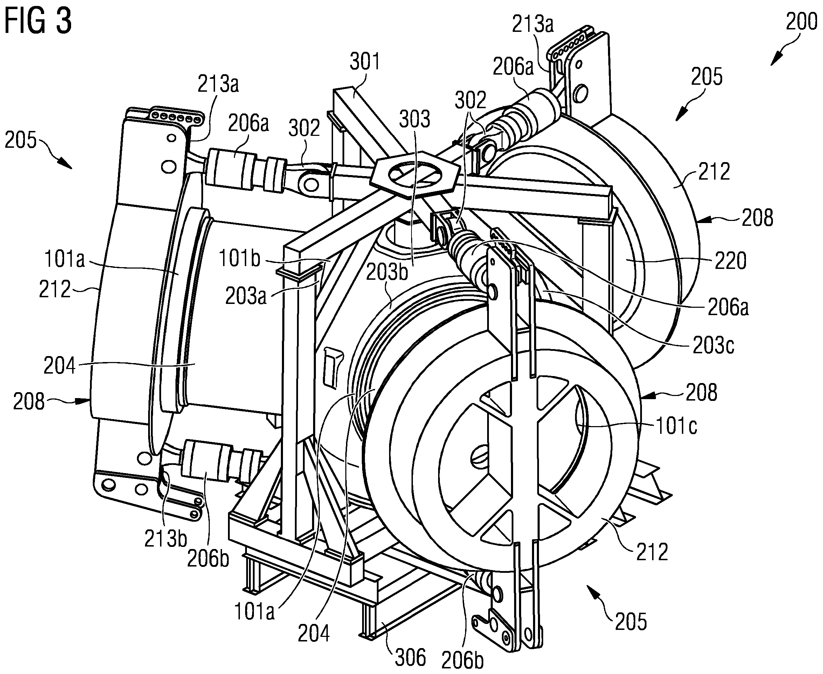

Fig. 3 is a schematic drawing illustrating the test rig 200 for testing up to six blade bearings 101 in a perspective view according to another embodiment. The blade bearing corresponding to bearing 101 of Fig. 2 is designated with the reference numeral 101b in Fig. 3. The embodiment of Fig. 3 is a modification of the embodiment of Fig. 2, so that the above explanations apply correspondingly.

In the test rig 200, the bearing support 203 is implemented as a hub 303 to which one, two, or three blade bearings can be mounted at the openings 203a-c (which may be blade mounts, in particular hub flanges). In the present example, two blade bearings 101b, 100d to be tested are mounted to the hub flanges 203a and 203b. To hub flange 203c, a static tube 220, e.g. a steel tube, is mounted. Such static tube 200 may be provided on one or on two of the hub flanges 203a-c. Such static tube may for example be used to apply a static bending moment to such hub flange on which no blade bearing is tested (using the respective test load unit 205), so that hub bending moments can be simulated while testing a blade bearing on another hub flange.

A test load unit 205 may be provided for each of the openings 203a-c. The test load unit 205 comprises two actuators 206a, 206b each connected to a frame 301 via mounts 302. Each of the two actuators 206 is further connected to the load transfer component 208, in this example a load yoke 212, via the mounts 213a, 213b. Similar to Fig. 2, each load transfer component 208 may be configured to test a second blade bearing 101a, 100c. The shaft elements 204 may connect the blade bearings 101a, 101c mounted on the load transfer component 208 to the blade bearings 101b, 101d mounted on the hub 303, respectively.

To the bearing support 203, implemented as the wind turbine hub 303, three setups similar to the embodiment of Fig. 2 can be attached. This may allow the testing of up to six blade bearings 101 in one test rig 200, e.g. by not using a static tube 220 but an additional test setup. In particular, three test load units 205 are mounted to the frame 301, which connects them with each other. The loads applied by the test load units 205 are thus confined to the frame. They are not transferred to ground, and no ground coupling is necessary. The test rig 200 is thus easier to transport and to install than prior art solutions.

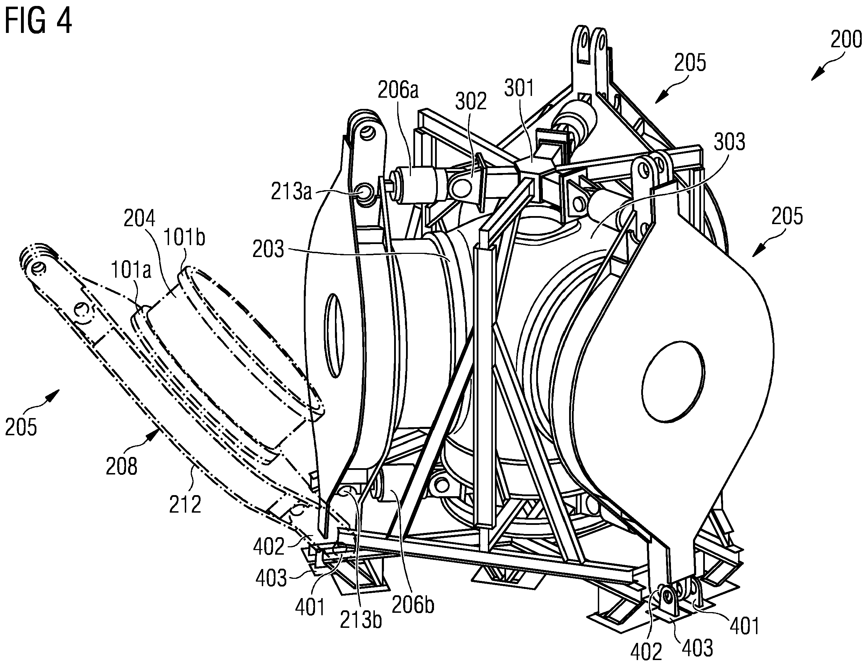

Each mount 302 may be provided on an end of a beam of the frame 301. The ends of the respective beams meet in a meeting point, where they are mechanically connected together, e.g. bolted or welded, optionally using an additional structure (see for example Fig. 4). Pulling or pushing forces applied by the respective actuators via their mounts to the beams may thus be compensated efficiently.

As mentioned above, each test load unit 205 may comprise two actuators, and the mounts of the actuators that lie in the same plane may respectively be connected by such beams. In other words, three connecting beams may be provided for one set of actuators 206a, and three connecting beams may be provided for one set of actuators 206b.

The frame 301 may further comprise a structure that connects these beams that meet in the meeting point together. In the example of Fig. 3, this structure employs C-shaped frame sections that interconnect the two meeting points; however, any other structure suitable for this purpose may be used as well. Further stabilizing beams may be comprised in frame 301.

The test rig 200 may be put on a moveable platform, such as on a frame 306, so that it can be moved with a reasonable effort.

Although Fig. 3 shows three test load units 205, it should be clear that in other implementations, only one or two test load units 205 may be provided. Further, it is also possible to provide three test load units 205 on the test rig, but to use only two or only one test load unit 205 for testing one or more blade bearings. The respective openings 203a-c (e.g., hub flanges) of bearing support 203 where no testing takes place may then for example be closed or be coupled to another structure, such as the static tube 220, e.g. a steel tube.

Fig. 4 illustrates an embodiment of the test rig 200. The embodiment is a modification of the embodiment of Fig. 3, so that the above explanations are equally applicable.

Similar to Fig. 3, the bearing support 203 is implemented as a rotor hub 303 to which the bearings 101b and 101d are mounted, a respective test load unit 205 including a load transfer component 208 on which the blade bearings 101a, 101c are mounted (via mounts 213a, 213b, see Fig. 2), and a shaft element 204 connecting the respective bearings to be tested. In the embodiment, a pivoting mechanism is provided for pivoting at least part of the test load unit. At least a part of the test load unit 205 may be detached from the frame 301, specifically the load transfer component 208. Detaching may comprise loosening the mounts 213a, 213b of the load transfer component 208, specifically of load yoke 212, from the actuators 206a, 206b.

The pivoting mechanism is implemented by a hinged connection 401, e.g. a pin connection, which is provided between the frame 301 and the load transfer component 208. By detaching the load transfer component 208, the load transfer component 208 may be pivoted about the hinged connection 401 and may be brought into a horizontal position. Hinged connection 401 may for example comprise a clevis 402 on the load transfer component 208 and a pin support 403 on frame 301, which are connected by a pin.

The resulting horizontal orientation of the test load unit 205 achieved by this mechanism may allow the mounting/unmounting of the bearings 101b and 101a to be tested and of the shaft element 204 in a relatively short amount of time, as they are easily reachable by external machines.

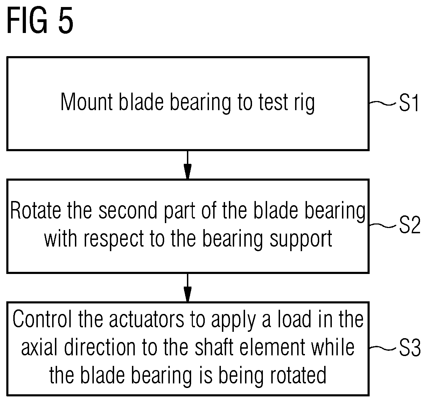

Fig. 5 is a flow diagram illustrating a method of testing a blade bearing of a wind turbine using a test rig. In a first step S1, a blade bearing 101 having a first part 201 and a second part 202 that is rotatable about an axial direction with respect to the first part 201 is inserted into the test rig 200 in order to perform a test. The mounting of the blade bearing may for example occur as described with respect to Fig. 4. In a second step S2, the second part 202 of the blade bearing 101 is rotated with respect to the bearing support 203, preferably comprising either a plate/yoke 211 or a rotor hub 301. A respective pitch actuation system 214 may be employed for this purpose. It may rotate the blade bearing back and forth (reciprocating movement), thus simulating the blade pitch oscillations that may occur during operation of a wind turbine under realistic conditions. In a third step S3, the test load unit 205, in particular the actuators 206a and 206b, is controlled, preferably by a controller 250, to apply a load in the axial direction to the blade bearing 101 via the shaft element 204 while the blade bearing 101 is being rotated. For example, one actuator may apply a pushing force and the other actuator may apply a pulling force to generate a bending moment that is applied to the blade bearing to be tested.

An efficient testing of one or more blade bearings may thus be achieved. The test rig is further compact, and transport thereof may be facilitated. The time for testing may be reduced by facilitating the mounting and unmounting of blade bearings to be tested, and by being able to test plural blade bearings at the same time. Further, one or more additional shaft elements and blade bearings to be tested may be stacked under each test load unit, so that 3, 4, or more blade bearings can be tested with one test load unit. Respective pitch actuation systems may be provided to rotate such additional shaft element(s).

While specific embodiments are disclosed herein, various changes and modifications can be made without departing from the scope of the invention. The present embodiments are to be considered in all respects as illustrative and non-restrictive, and all changes coming within the meaning of the appended claims are intended to be embraced therein.

## Claims

1. A test rig for testing a blade bearing (101) of a wind turbine blade, wherein the blade bearing (101) comprises a first part (201) and a second part (202) that is rotatable about an axial direction with respect to the first part (201), wherein the test rig (200) comprises:
- a bearing support (203, 303) configured to be mounted to the first part (201) of the blade bearing (101);
- a shaft element (204) configured to be mounted to the second part (202) of the blade bearing (101), wherein the shaft element (204) is rotatable with respect to the bearing support (203, 303); and
- a test load unit (205) configured to apply a load in the axial direction to the shaft element (204), wherein the shaft element is configured to at least partly transfer the load to the blade bearing, wherein the test load unit (205) comprises at least one actuator (206) that is controllable to apply the load,
**characterized in that** the test rig (200) is configured to confine the load to be applied to the blade bearing (101) by the test load unit (205) to the test rig (200) such that the load applied to the blade bearing (101) to be tested by the test load unit (205) is not transferred to a ground on which the test rig (200) is arranged.

2. The test rig according to claim 1, wherein the bearing support (203) comprises at least one mount (207) to which the at least one actuator (206) is mounted, or wherein the bearing support (303) is mounted to a frame (301), wherein the frame (301) comprises at least one mount (302) to which the at least one actuator (206) is mounted.

3. The test rig of any of the preceding claims, wherein the bearing support (203) is a wind turbine component.

4. The test rig of any of the preceding claims, wherein the bearing support (203) comprises or is a rotor hub (303) of a wind turbine.

5. The test rig of claim 4, wherein the test rig (200) comprises a frame (301), the hub (303) being mounted to the frame (301), wherein the at least one actuator (206) is mounted to the frame (301) and acts between the test load unit (205) and the frame (301).

6. The test rig of any of the preceding claims, wherein the test load unit (205) comprises a load transfer component (208), wherein the at least one actuator (206) is mounted to the load transfer component (208) to apply a load to the load transfer component (208), and wherein the load transfer component (208) is configured to transfer the applied load to the shaft element (204).

7. The test rig of any of the preceding claims, wherein the shaft element (204) is rotatable with respect to the load transfer component (208).

8. The test rig of any of the preceding claims, wherein the load transfer component (208) is configured to be mounted to a first part of a second blade bearing (101a) to be tested, the second blade bearing (101a) having a second part rotatable with respect to the first part, wherein a second end of the shaft element (204) is configured to be mounted to the second part of the second blade bearing, the second end of the shaft element (204) being opposite to a first end of the shaft element (204) to which the second part (202) of the first blade bearing (101) is to be mounted.

9. The test rig of claim 8, wherein the test rig (200) comprises at least two test load units (205) and at least two respective shaft elements (204), wherein each test load unit (205) is configured to apply a load via the respective shaft element (204) to a blade bearing (101,101a) to be tested, wherein the bearing support (203) is configured to be mounted to the first part (201) of each of the at least two blade bearings (101) to be tested.

10. The test rig of any of the preceding claims, wherein the bearing support (203) is a rotor hub (303) of a wind turbine, wherein the rotor hub (303) comprises three blade mounts (203a-c), wherein one, two, or each of the blade mounts is configured to be mounted to the first part (201) of a respective blade bearing (101) to be tested, wherein the test rig (200) comprises one, two, or three respective test load units and corresponding shaft elements, each test load unit (205) being configured to apply a load via the respective shaft element (204) to the respective blade bearing (101) to be tested.

11. The test rig of any of the preceding claims, wherein the test load unit (205) comprises at least two actuators (206) mounted on opposite sides of a load transfer component (208) that is configured to transfer the load applied by the at least two actuators (206) to the shaft element (204).

12. The test rig of any of the preceding claims, further comprising a controller (250) configured to control the at least one actuator (206) to apply a predetermined load to the shaft element (204) to test a blade bearing (101).

13. The device of any of the preceding claims, wherein the test rig (200) comprises a pivoting mechanism (401) for inserting a blade bearing (101) to be tested into the test rig (200), wherein the pivoting mechanism (401) is configured to allow a pivoting of at least a part of the test load unit (205), in particular of a load transfer component (208) thereof, into a horizontal orientation to allow the shaft element (204) and at least one blade bearing (101) to be tested to be mounted to the test load unit (205).

14. A method of testing a blade bearing (101) of a wind turbine blade using a test rig (200), wherein the blade bearing (101) comprises a first part (201) and a second part (202) that is rotatable about an axial direction with respect to the first part (201), wherein the test rig (200) comprises a bearing support (203, 303) configured to be mounted to the first part (201) of the blade bearing (101); a shaft element (204) configured to be mounted to the second part (202) of the blade bearing (101), wherein the shaft element (204) is rotatable with respect to the bearing support (203, 303); and a test load unit (205) configured to apply a load in the axial direction to the shaft element (204), wherein the test load unit (205) comprises at least one actuator (206),
wherein the method comprises:
- testing the blade bearing (101) by rotating the second part of the blade bearing with respect to the bearing support (203, 303) and controlling the actuator (206) to apply a load in the axial direction to the blade bearing via the shaft element (204) while the blade bearing is being rotated,
**characterized in that** the test rig (200) is configured to confine the load to be applied to the blade bearing (101) by the test load unit (205) to the test rig (200) such that the load applied to the blade bearing (101) to be tested by the test load unit (205) is not transferred to a ground on which the test rig (200) is arranged.

## Patentansprüche

1. Prüfstand zum Prüfen eines Schaufellagers (101) einer Windturbinenschaufel, wobei das Schaufellager (101) einen ersten Teil (201) und einen zweiten Teil (202), der um eine axiale Richtung in Bezug auf den ersten Teil (201) drehbar ist, umfasst, wobei der Prüfstand (200) Folgendes umfasst:
- eine Lagerstütze (203, 303), die dazu konfiguriert ist, an dem ersten Teil (201) des Schaufellagers (101) montiert zu sein;
- ein Wellenelement (204), das dazu konfiguriert ist, an dem zweiten Teil (202) des Schaufellagers (101) montiert zu sein, wobei das Wellenelement (204) in Bezug auf die Lagerstütze (203, 303) drehbar ist; und
- eine Prüflasteinheit (205), die dazu konfiguriert ist, eine Last in der axialen Richtung auf das Wellenelement (204) anzuwenden, wobei das Wellenelement dazu konfiguriert ist, die Last mindestens teilweise auf das Schaufellager zu übertragen, wobei die Prüflasteinheit (205) mindestens einen Aktor (206) umfasst, der dazu steuerbar ist, die Last anzuwenden,
**dadurch gekennzeichnet, dass** der Prüfstand (200) dazu konfiguriert ist, die Last, die durch die Prüflasteinheit (205) auf das Schaufellager (101) anzuwenden ist, derart auf den Prüfstand (200) zu begrenzen, dass die Last, die durch die Prüflasteinheit (205) auf das zu prüfende Schaufellager (101) angewendet wird, nicht auf einen Boden, auf dem der Prüfstand (200) angeordnet ist, übertragen wird.

2. Prüfstand nach Anspruch 1, wobei die Lagerstütze (203) mindestens eine Halterung (207) umfasst, an welcher der mindestens eine Aktor (206) montiert ist, oder wobei die Lagerstütze (303) an einem Rahmen (301) montiert ist, wobei der Rahmen (301) mindestens eine Halterung (302) umfasst, an welcher der mindestens eine Aktor (206) montiert ist.

3. Prüfstand nach einem der vorhergehenden Ansprüche, wobei die Lagerstütze (203) eine Windturbinenkomponente ist.

4. Prüfstand nach einem der vorhergehenden Ansprüche, wobei die Lagerstütze (203) eine Rotornabe (303) einer Windturbine umfasst oder ist.

5. Prüfstand nach Anspruch 4, wobei der Prüfstand (200) einen Rahmen (301) umfasst, die Nabe (303) an dem Rahmen (301) montiert ist, wobei der mindestens eine Aktor (206) an dem Rahmen (301) montiert ist und zwischen der Prüflasteinheit (205) und dem Rahmen (301) wirkt.

6. Prüfstand nach einem der vorhergehenden Ansprüche, wobei die Prüflasteinheit (205) eine Lastübertragungskomponente (208) umfasst, wobei der mindestens eine Aktor (206) an der Lastübertragungskomponente (208) montiert ist, um eine Last auf die Lastübertragungskomponente (208) anzuwenden, und wobei die Lastübertragungskomponente (208) dazu konfiguriert ist, die angewendete Last auf das Wellenelement (204) zu übertragen.

7. Prüfstand nach einem der vorhergehenden Ansprüche, wobei das Wellenelement (204) in Bezug auf die Lastübertragungskomponente (208) drehbar ist.

8. Prüfstand nach einem der vorhergehenden Ansprüche, wobei die Lastübertragungskomponente (208) dazu konfiguriert ist, an einem ersten Teil eines zu prüfenden zweiten Schaufellagers (101a) montiert zu sein, wobei das zweite Schaufellager (101a) einen zweiten Teil aufweist, der in Bezug auf den ersten Teil drehbar ist, wobei ein zweites Ende des Wellenelements (204) dazu konfiguriert ist, an dem zweiten Teil des zweiten Schaufellagers montiert zu sein, wobei das zweite Ende des Wellenelements (204) einem ersten Ende des Wellenelements (204), an dem der zweite Teil (202) des ersten Schaufellagers (101) zu montieren ist, gegenüberliegt.

9. Prüfstand nach Anspruch 8, wobei der Prüfstand (200) mindestens zwei Prüflasteinheiten (205) und mindestens zwei jeweilige Wellenelemente (204) umfasst, wobei jede Prüflasteinheit (205) dazu konfiguriert ist, über das jeweilige Wellenelement (204) eine Last auf ein zu prüfendes Schaufellager (101, 101a) anzuwenden, wobei die Lagerstütze (203) dazu konfiguriert ist, an dem ersten Teil (201) jedes der mindestens zwei zu prüfenden Schaufellager (101) montiert zu sein.

10. Prüfstand nach einem der vorhergehenden Ansprüche, wobei die Lagerstütze (203) eine Rotornabe (303) einer Windturbine ist, wobei die Rotornabe (303) drei Schaufelhalterungen (203a-c) umfasst, wobei eine, zwei oder jede der Schaufelhalterungen dazu konfiguriert ist, an dem ersten Teil (201) einer jeweiligen zu prüfenden Schaufelhalterung (101) montiert zu sein, wobei der Prüfstand (200) eine, zwei oder drei jeweilige Prüflasteinheiten und entsprechende Wellenelemente umfasst, wobei jede Prüflasteinheit (205) dazu konfiguriert ist, über das jeweilige Wellenelement (204) eine Last auf das jeweilige zu prüfende Schaufellager (101) anzuwenden.

11. Prüfstand nach einem der vorhergehenden Ansprüche, wobei die Prüflasteinheit (205) mindestens zwei Aktoren (206) umfasst, die auf gegenüberliegenden Seiten einer Lastübertragungskomponente (208) montiert sind, die dazu konfiguriert ist, die Last, die durch die mindestens zwei Aktoren (206) angewendet wird, auf das Wellenelement (204) zu übertragen.

12. Prüfstand nach einem der vorhergehenden Ansprüche, ferner umfassend eine Steuerung (250), die dazu konfiguriert ist, den mindestens einen Aktor (206) zu steuern, um eine vorbestimmte Last auf das Wellenelement (204) anzuwenden, um ein Schaufellager (101) zu prüfen.

13. Vorrichtung nach einem der vorhergehenden Ansprüche, wobei der Prüfstand (200) einen Schwenkmechanismus (401) zum Einführen eines zu prüfenden Schaufellagers (101) in den Prüfstand (200) umfasst, wobei der Schwenkmechanismus (401) dazu konfiguriert ist, ein Schwenken von mindestens einem Teil der Prüflasteinheit (205), insbesondere einer Lastübertragungskomponente (208) davon, in eine horizontale Ausrichtung zu ermöglichen, um dem Wellenelement (204) und mindestens einem zu prüfenden Schaufellager (101) zu ermöglichen, an der Prüflasteinheit (205) montiert zu werden.

14. Verfahren zum Prüfen eines Schaufellagers (101) einer Windturbinenschaufel unter Verwendung eines Prüfstands (200), wobei das Schaufellager (101) einen ersten Teil (201) und einen zweiten Teil (202), der um eine axiale Richtung in Bezug auf den ersten Teil (201) drehbar ist, umfasst, wobei der Prüfstand (200) eine Lagerstütze (203, 303), die dazu konfiguriert ist, an dem ersten Teil (201) des Schaufellagers (101) montiert zu sein; ein Wellenelement (204), das dazu konfiguriert ist, an dem zweiten Teil (202) des Schaufellagers (101) montiert zu sein, wobei das Wellenelement (204) in Bezug auf die Lagerstütze (203, 303) drehbar ist; und eine Prüflasteinheit (205), die dazu konfiguriert ist, eine Last in der axialen Richtung auf das Wellenelement (204) anzuwenden, umfasst, wobei die Prüflasteinheit (205) mindestens einen Aktor (206) umfasst, wobei das Verfahren Folgendes umfasst:
- Prüfen des Schaufellagers (101) durch Drehen des zweiten Teils des Schaufellagers in Bezug auf die Lagerstütze (203, 303) und Steuern des Aktors (206), um über das Wellenelement (204) eine Last in der axialen Richtung auf das Schaufellager anzuwenden, während das Schaufellager gedreht wird,
**dadurch gekennzeichnet, dass** der Prüfstand (200) dazu konfiguriert ist, die Last, die durch die Prüflasteinheit (205) auf das Schaufellager (101) anzuwenden ist, derart auf den Prüfstand (200) zu begrenzen, dass die Last, die durch die Prüflasteinheit (205) auf das zu prüfende Schaufellager (101) angewendet wird, nicht auf einen Boden, auf dem der Prüfstand (200) angeordnet ist, übertragen wird.

## Revendications

1. Banc d'essai pour tester un roulement de pale (101) d'une pale d'éolienne, dans lequel le roulement de pale (101) comprend une première partie (201) et une seconde partie (202) qui est mobile en rotation autour d'une direction axiale par rapport à la première partie (201), dans lequel le banc d'essai (200) comprend :
- un support de roulement (203, 303) configuré pour être monté sur la première partie (201) du roulement de pale (101) ;
- un élément d'arbre (204) configuré pour être monté sur la seconde partie (202) du roulement de pale (101), dans lequel l'élément d'arbre (204) est mobile en rotation par rapport au support de roulement (203, 303) ; et
- une unité de charge d'essai (205) configurée pour appliquer une charge dans la direction axiale à l'élément d'arbre (204), dans laquelle l'élément d'arbre est configuré pour transférer au moins partiellement la charge au roulement de pale, dans laquelle l'unité de charge d'essai (205) comprend au moins un actionneur (206) qui peut être commandé pour appliquer la charge,
**caractérisé en ce que** le banc d'essai (200) est configuré pour confiner au banc d'essai (200) la charge devant être appliquée au roulement de pale (101) par l'unité de charge d'essai (205), de telle sorte que la charge appliquée au roulement de pale (101) devant être testé par l'unité de charge d'essai (205) ne soit pas transférée à un sol sur lequel le banc d'essai (200) est disposé.

2. Banc d'essai selon la revendication 1, dans lequel le support de roulement (203) comprend au moins un support de montage (207) sur lequel l'au moins un actionneur (206) est monté, ou dans lequel le support de roulement (303) est monté sur un bâti (301), dans lequel le bâti (301) comprend au moins un support de montage (302) sur lequel l'au moins un actionneur (206) est monté.

3. Banc d'essai selon l'une quelconque des revendications précédentes, dans lequel le support de roulement (203) est un composant d'éolienne.

4. Banc d'essai selon l'une quelconque des revendications précédentes, dans lequel le support de roulement (203) comprend ou est un moyeu de rotor (303) d'une éolienne.

5. Banc d'essai selon la revendication 4, dans lequel le banc d'essai (200) comprend un bâti (301), le moyeu (303) étant monté sur le bâti (301), dans lequel l'au moins un actionneur (206) est monté sur le bâti (301) et agit entre l'unité de charge d'essai (205) et le bâti (301).

6. Banc d'essai selon l'une quelconque des revendications précédentes, dans lequel l'unité de charge d'essai (205) comprend un composant de transfert de charge (208), dans lequel l'au moins un actionneur (206) est monté sur le composant de transfert de charge (208) pour appliquer une charge au composant de transfert de charge (208), et dans lequel le composant de transfert de charge (208) est configuré pour transférer la charge appliquée à l'élément d'arbre (204).

7. Banc d'essai selon l'une quelconque des revendications précédentes, dans lequel l'élément d'arbre (204) est mobile en rotation par rapport au composant de transfert de charge (208).

8. Banc d'essai selon l'une quelconque des revendications précédentes, dans lequel le composant de transfert de charge (208) est configuré pour être monté sur une première partie d'un second roulement de pale (101a) devant être testé, le second roulement de pale (101a) ayant une seconde partie mobile en rotation par rapport à la première partie, dans lequel une seconde extrémité de l'élément d'arbre (204) est configurée pour être montée sur la seconde partie du second roulement de pale, la seconde extrémité de l'élément d'arbre (204) étant opposée à une première extrémité de l'élément d'arbre (204) sur laquelle la seconde partie (202) du premier roulement de pale (101) doit être montée.

9. Banc d'essai selon la revendication 8, dans lequel le banc d'essai (200) comprend au moins deux unités de charge d'essai (205) et au moins deux éléments d'arbre (204) respectifs, dans lequel chaque unité de charge d'essai (205) est configurée pour appliquer une charge via l'élément d'arbre (204) respectif à un roulement de pale (101, 101a) devant être testé, dans lequel le support de roulement (203) est configuré pour être monté sur la première partie (201) de chacun des au moins deux roulements de pale (101) devant être testés.

10. Banc d'essai selon l'une quelconque des revendications précédentes, dans lequel le support de roulement (203) est un moyeu de rotor (303) d'une éolienne, dans lequel le moyeu de rotor (303) comprend trois supports de pale (203a-c), dans lequel un, deux ou chacun des supports de pale est configuré pour être monté sur la première partie (201) d'un roulement de pale (101) respectif devant être testé, dans lequel le banc d'essai (200) comprend une, deux ou trois unités de charge d'essai respectives et des éléments d'arbre correspondants, chaque unité de charge d'essai (205) étant configurée pour appliquer une charge via l'élément d'arbre (204) respectif au roulement de pale (101) respectif devant être testé.

11. Banc d'essai selon l'une quelconque des revendications précédentes, dans lequel l'unité de charge d'essai (205) comprend au moins deux actionneurs (206) montés sur des côtés opposés d'un composant de transfert de charge (208) qui est configuré pour transférer la charge appliquée par les au moins deux actionneurs (206) à l'élément d'arbre (204).

12. Banc d'essai selon l'une quelconque des revendications précédentes, comprenant en outre une unité de commande (250) configurée pour commander l'au moins un actionneur (206) afin d'appliquer une charge prédéterminée à l'élément d'arbre (204) pour tester un roulement de pale (101).

13. Dispositif selon l'une quelconque des revendications précédentes, dans lequel le banc d'essai (200) comprend un mécanisme de pivotement (401) pour insérer un roulement de pale (101) devant être testé dans le banc d'essai (200), dans lequel le mécanisme de pivotement (401) est configuré pour permettre un pivotement d'au moins une partie de l'unité de charge d'essai (205), en particulier d'un composant de transfert de charge (208) de celle-ci, selon une orientation horizontale pour permettre le montage de l'élément d'arbre (204) et d'au moins un roulement de pale (101) devant être testé sur l'unité de charge d'essai (205).

14. Procédé de test d'un roulement de pale (101) d'une pale d'éolienne à l'aide d'un banc d'essai (200), dans lequel le roulement de pale (101) comprend une première partie (201) et une seconde partie (202) qui est mobile en rotation autour d'une direction axiale par rapport à la première partie (201), dans lequel le banc d'essai (200) comprend un support de roulement (203, 303) configuré pour être monté sur la première partie (201) du roulement de pale (101) ; un élément d'arbre (204) configuré pour être monté sur la seconde partie (202) du roulement de pale (101), dans lequel l'élément d'arbre (204) est mobile en rotation par rapport au support de roulement (203, 303) ; et une unité de charge d'essai (205) configurée pour appliquer une charge dans la direction axiale à l'élément d'arbre (204), dans laquelle l'unité de charge d'essai (205) comprend au moins un actionneur (206), le procédé comprenant :
le test du roulement de pale (101) par la mise en rotation de la seconde partie du roulement de pale par rapport au support de roulement (203, 303) et la commande de l'actionneur (206) pour appliquer une charge dans la direction axiale au roulement de pale via l'élément d'arbre (204) pendant que le roulement de pale est en rotation,
**caractérisé en ce que** le banc d'essai (200) est configuré pour confiner au banc d'essai (200) la charge devant être appliquée au roulement de pale (101) par l'unité de charge d'essai (205), de telle sorte que la charge appliquée au roulement de pale (101) devant être testé par l'unité de charge d'essai (205) ne soit pas transférée à un sol sur lequel le banc d'essai (200) est disposé.
